# EUROPEAN PATENT APPLICATION

(11) **EP 4 826 937 A1**
(43) Date of publication of application: **21.10.2026**
(21) Application number: 25382385.0
(22) Date of filing: 14.04.2025
(51) Int. Cl.: H02J 1/14, H02J 7/00, H02J 7/34, H02J 7/36

(54) **AN AERONAUTICAL ENERGY NETWORK SYSTEM**

(71) Applicant: Airbus Operations, S.L.U., 28906 Getafe (Madrid) (ES)
(72) Inventor: DE BROUWER, Gabrielle Josephine Christiane, E-28906 Getafe, Madrid (ES); HERNÁNDEZ HIDALGO, Carlos, E-28906 Getafe, Madrid (ES)
(74) Representative: ABG Intellectual Property Law, S.L.

(57) **Abstract**

An aeronautical energy network system (100, 101) with an energy network (1) having a defined nominal voltage operating range (Vr) to which electrical loads (11,12) and a battery (2) are connected, the battery (2) comprising a plurality of battery cells (22) arranged in cell groups being the cells forming a group connected in series in a fixed manner, the battery having an electrical connection circuit with controllable switching means configured to at least selectively connect cell groups to each other in series or in parallel producing, in a corresponding connection state of the circuit, a battery output instant voltage (Vi). The system further comprises a controller (21) configured to command the controllable switching means to change the connection state of the circuit between at least two different connection states, of which one is a connection state producing a battery output instant voltage (Vi) outside the nominal voltage operating range (Vr) of the network; and the other is a connection state producing a battery output instant voltage (Vi) within the nominal voltage operating range of the network.

## Description

### TECHNICAL FIELD OF THE INVENTION

The invention belongs to the field of energy networks and more specifically to the field of aeronautical energy network systems, of the type comprising an energy network to which electrical loads for the service of an aircraft are connected and to which at least one battery, intended to supply electricity to the energy network, is also connected.

### BACKGROUND OF THE INVENTION

The use of batteries to supply electrical energy in aircrafts is known.

Examples of specific energy network systems to which electricity is supplied by a battery are those associated with aircraft start up or aircraft off functions.

As in other fields of application, the batteries used for these specific energy network systems comprise a number of battery cells. A cell is commonly called the unitary device that converts chemical energy into electrical energy, while a battery is commonly called the accumulation of a set of cells electrically interconnected for the battery to produce a battery output voltage.

A growing field where batteries are used to provide power to a device is the automotive industry, for example, to power a vehicle.

The electrical demand that an electric motor may need to propel a vehicle is so varied that systems are known in which several battery modules can be interconnected in different ways, for example, to jointly provide peaks at specific times during the operation of the vehicle that are not required during other moments of its operation. A battery module is a unit that houses multiple battery cells and their management system.

From patent document US 2023/0130454 it is known, for example, a system and a method of controlling a battery connection of an electric vehicle, wherein the battery has a plurality of battery modules. The system further comprises a power relay assembly (PRA) for electrically connecting or disconnecting the battery unit and an inverter and also for changing a connection structure of the plurality of battery modules to one of a battery unit serial mode and a battery unit parallel mode; and a controller for switching the connection structure to the battery unit serial mode through the PRA in response to a driver's request to increase motor output; and to the battery unit parallel mode through the PRA in response to a driver's request to increase a cruising distance.

A typical energy network system of an aircraft, as those previously identified as mere examples, requires stable power delivery to the loads, this is, to the various electric devices or machines connected to the network. In this sense, an energy network system of an aircraft does not resemble many propulsion systems in which it is appreciated that the power delivered can be drastically varied.

The batteries used to supply energy according to these stable power conditions in an energy network system of an aircraft are selected to produce a predetermined nominal voltage operating range to operate stably and optimally the connected loads.

It is in this context an objective of the present invention an aeronautical energy network system in which the voltage supplied into the network coming from the battery can be controllable.

It is of interest that this control be implemented by control means simple and robust.

It is of interest that the mechanical parts or components that require these control means can be part of the battery, that is, that they are self-supporting with the battery although they can be commanded from outside the battery.

Commonly, DC/DC intermediating converters between the batteries and the connected loads deploy an important role in energy network systems, including aeronautical energy network systems. These converters are essential power electronic circuits that play a critical role in modern power management systems. Their primary function is to convert the voltage of a direct current (DC) source, such as that provided by a battery, from one voltage level to another, ensuring stable and efficient power delivery to the loads.

A battery output instant voltage fluctuates due to factors such as for example battery discharging over time, environmental conditions, or level of power drawn from the battery; and for this reason alone a DC/DC intermediating converter is typically to be provided to maintain a constant output instant voltage, providing reliable power to the loads.

It is in this context a further objective of the present invention an aeronautical energy network system in which the voltage supplied to the network coming from the battery can be controllable from the battery itself, being able to control the battery output instant voltage such that in some embodiments, the system may not require a DC/DC intermediate converter thus reducing the complexity of the system and the weight of the installation, which is essential in aeronautical systems.

On the other hand, aeronautical energy network systems may comprise network-connected devices that are bi-directional. By bi-directional devices it is meant devices that under certain circumstances, even if only temporarily, function in a reversible manner and inject electrical energy into the network instead of consuming electrical energy. An example is an electrical motor-machine that can function as generator.

In this context, it is a further objective of the invention an aeronautical energy network system that can be sufficiently versatile to take advantage of those situations in which, even if only temporarily, electrical energy is injected into the network, optimizing to the maximum this energy supplied to the network.

Likewise, to face and guarantee energy supply in emergency situations, conventional aeronautical energy network systems are provided with auxiliary or emergency power sources, which implies, among others, an increase in the number of components, and again complexity and weight of the system.

An additional objective of the invention is also a system that minimizes, or can directly eliminate, these disadvantages.

### SUMMARY OF THE INVENTION

To achieve the objectives set out above, in a first inventive aspect the invention provides an aeronautical energy network system according to claim 1.

The said aeronautical energy network system comprises an energy network having a defined nominal voltage operating range Vr to which electrical loads and at least one battery are connected, the said battery adapted to supply electricity to the energy network and comprising a plurality of battery cells.

The system is essentially characterized in that the battery cells are arranged in cell groups, comprising at least one main group of G cells connected in series in a fixed manner and several subsidiary groups each having gᵢ cells connected in series in a fixed manner, where gᵢ≤G, preferably gᵢ<G; in that the battery has an electrical connection circuit with controllable switching means configured to at least selectively connect cell groups to each other in series or in parallel producing, in a corresponding connection state of the circuit, a battery output instant voltage Vi; and in that the system further comprises a controller, configured to command the controllable switching means to change the connection state of the circuit between at least two different connection states, of which one is a connection state producing a battery output instant voltage Vi outside the nominal voltage operating range Vr of the network; and the other is a connection state producing a battery output instant voltage Vi within the nominal voltage operating range of the network.

The characteristics of a system according to the invention allows a better use of the battery and even to simplify the network system, among other advantages.

The characteristics of a system according to the invention offer the operator to vary via the controller, manually but preferably automatically according to a preestablished and programmable rule program, the battery output instant voltage Vi on demand, in response to certain situations that may occur.

Depending on the circumstances, it will be of interest to change the connection state of the circuit so that the battery output instant voltage Vi is higher or lower than that produced by a previous connection state of the circuit.

The system of the invention is prepared for this change in Vi to be of such magnitude that, for example, allow the battery to continue being an appropriate source of energy to the network for non-instantaneous periods once in a given connection state of the circuit the produced battery output instant voltage Vi falls below a lower voltage limit value Vmin of the nominal voltage operating range Vr, as later exemplified.

In an embodiment of the system, there are several main groups of cells each group having a same number of G cells and several subsidiary groups all having the same number of gᵢ cells, wherein gᵢ<G.

The invention also envisages other embodiments, including, for example, those where there are several main groups of cells each group having a same number of G cells and several subsidiary groups with subsidiary groups having a different number of gᵢ cells, wherein gᵢ<G.

These alternatives make it possible to practice the invention in a simpler and more effective way than that the expert would have anticipated a priori taking into account that a battery appropriate to supply the tension required by an aeronautical energy network may have hundreds of cells to produce voltage values of hundreds of volts, as it is also exemplified later.

In this sense, being the nominal voltage operating range Vr determined by an upper voltage limit value Vmax and a lower voltage limit value Vmin, in an embodiment of the invention the minimum total number T of battery cells belonging to a main group connectable in series in the electrical connection circuit complies with $Vmin \leq T * Cv ,$ wherein Cv is the battery's cell nominal voltage.

That is, not only by connecting main groups in series Vmin can be achieved but it cannot be connected fewer main groups in series than that necessary to reach Vmin.

The battery cells can be packed in modules, to achieve serviceable units, replicated and electrically interconnectable in series controllable by controllable switching means, in each module the cells being arranged as above described, therefore in each module the cells being arranged in cell groups comprising at least one main group of G cells and several subsidiary groups each having gᵢ cells.

In such a case in an embodiment of the invention wherein Vmin ≤ T*Cv, $T = m * G$ wherein m is the minimum number of modules connectable in series.

That is, there being modules, each module with at least one main group with its number of G cells, the minimum number of modules connectable in series, in each module connected in series only the cells of one main group (without aiding series connections of other cells of further groups of cells), suffices to achieve Vmin.

The invention contemplates though other embodiments.

Yet in another embodiment of the invention $Vmin \leq m * \left(G+gi*Y\right) * Cv$ wherein m is the minimum number of modules connectable in series and *Y* is a number of subsidiary groups connected in series with one main group in each module, wherein *Y*≥1.

Preferably, in those circuit configurations providing a minimum total number T of battery cells connectable in series in the electrical connection circuit, being this number T a number that suffices to achieve Vmin, all the cells are connected to the circuit.

For example, there being modules, the circuit connection state giving rise to that minimum total number T of battery cells that suffices to achieve Vmin, is a circuit connection state wherein all the modules are electrically interconnected; wherein each module has a *n* number of parallel connections each having a same number of cells connected in series; and wherein all the cells in each module are electrically interconnected.

In any case, a proper selection of the number gᵢ and of the quantity of subsidiary groups can offer enough interconnection options between groups of cells to allow an operator via the controller, manually but preferably automatically, to vary the battery output instant voltage Vi on demand, in response to certain situations that may occur.

In an embodiment, there are sufficient and/or proper available interconnection options so that the battery can be directly connected to the energy network without a DC/DC intermediating converter. This allows to significantly reduce the weight of the system, which is especially appreciated in the field of aeronautics.

In an embodiment of the invention, given a first circuit connection state comprising a *n* number of parallel connections each having a *x* number of cells connected in series producing a battery output instant voltage Vi, the controller is configured for one or more of the following:
a) commanding the controllable switching means to change electrical connections between cell groups to reduce the *x* number of cells connected in series if the battery output instant voltage Vi exceeds an upper voltage limit value Vmax of the nominal voltage operating range Vr, such that in a second circuit connection state a battery output instant voltage Vi within the nominal voltage operating range Vr of the network is produced,
b) commanding the controllable switching means changing the electrical connections between cell groups to increase the *x* number of cells connected in series if the battery output instant voltage Vi does not reach the lower voltage limit value Vmin of the nominal voltage operating range Vr, such that in a second circuit connection state a battery output instant voltage Vi within the nominal voltage operating range Vr of the network is produced.

That is, the system is prepared to change the connection state of the circuit to produce a Vi within Vr starting from a previous connection state where Vi was outside Vr.

Particularly, as it will be also exemplified after, in an embodiment the system is prepared for this change in Vi to be of such magnitude that, for example, allows the battery to continue being an appropriate source of energy to the network for non-instantaneous periods once in a given previous connection state the produced battery output instant voltage Vi falls below a lower voltage limit value Vmin of the nominal voltage operating range Vr.

If the cells are distributed in modules, this is possible by changing connections between groups of cells in each module and/or changing connections between modules, as exemplified below.

Alternatively, or in addition to the above, in an embodiment of the invention the energy network is a network to which one or more bi-directional electrical devices, such as an electric engine capable of being a load or an electrical source, are connected, the controller is configured for one or more of the following:
c) commanding the controllable switching means to change the electrical connections between groups to increase the x number of cells connected in series if one or more bi-directional electrical devices works as an electricity source producing a device output instant voltage Vdᵢ exceeding the battery output instant voltage Vi; such that in a second circuit connection state the battery output instant voltage Vi exceeds the device output instant voltage Vdᵢ but remains within the nominal voltage operating range Vr therefore imposing the network voltage;
d) commanding the controllable switching means to change the electrical connections between cell groups to reduce the *x* number of cells connected in series if one or more bi-directional electrical devices works as an electricity source producing a device output instant voltage Vdᵢ within the nominal voltage operating range Vr and exceeding the battery output instant voltage Vi, such that in a second circuit connection state the battery output instant voltage Vi falls below the device output instant voltage Vdᵢ forcing the battery charge, the battery acting as an electrical load.

That is, the system is prepared to change the connection state of the circuit either to produce a Vi above Vdᵢ starting from a previous connection state wherein Vi was below Vdᵢ, or reversely, to produce a Vi below Vdᵢ starting from a previous connection state wherein Vi was above Vdᵢ.

Particularly in the second case, temporary surplus energy may be used to charge the battery.

The invention envisages that when commanding the controllable switching means to reduce or increase the *x* number of cells connected in series the total number of group of cells electrically connected to the circuit is maintained.

The invention also envisages that commanding the controllable switching means, to reduce or increase the *x* number of cells connected in series, comprises disconnecting at least one group of cells from the circuit or connecting at least one previously disconnected group of cells to the circuit, respectively.

Again, if the cells are distributed in modules, this is possible by changing connections between groups of cells in each module and/or changing connections between modules.

In a second inventive aspect, the invention provides an aircraft according to claim 11. This is an aircraft comprising an aeronautical energy network system according to any embodiment of the first inventive aspect.

Further aspects of the invention are the operational logics that can be followed to command the controllable switching means in a system according to the first or to the second inventive aspects of the invention.

These logics can obey preestablished rules. Commonly, for this purpose, the controller can be provided with programmable means and the system with measuring means or sensors to know the instantaneous status or monitor the status of the network including the value of the battery output instant voltage Vi.

In a third inventive aspect, the invention provides a method according to claim 12, which is a method of commanding the controllable switching means of the at least one battery supplying electricity to the aeronautical energy network system of the present invention, the method comprising:
- selecting a first connection state of the circuit whose associated battery predicted OCV (Open Circuit Voltage) is at more than 70% of its SoC (State Of Charge) within the nominal voltage operating range Vr of the network,
- connecting the battery to the network, the battery adopting the first connection state,
- monitoring the battery output instant voltage Vi and,
- if the said battery output instant voltage Vi falls below the nominal voltage operating range Vr of the network, commanding the controllable switching means changing the first connection state of the circuit to a second connection state of the circuit producing a battery output instant voltage Vi within the nominal voltage operating range Vr of the network.

In an embodiment of this method, it further comprises, the battery adopting the said second connection state of the circuit,
- monitoring the battery output instant voltage Vi and,
- if the said battery output instant voltage Vi falls outside the nominal voltage operating range Vr of the network, commanding the controllable switching means changing the second connection state of the circuit to a third connection state of the circuit producing a battery output instant voltage Vi within the nominal voltage operating range Vr of the network.

As already mentioned, commanding the controllable switching means changing the connection state of the circuit may comprise disconnecting at least one group of cells from the circuit.

In a fourth inventive aspect, the invention provides a method according to claim 15.

The method is a method of commanding the controllable switching means of the at least one battery supplying electricity to the aeronautical energy network system of the present invention in that variant where the energy network is a network to which one or more bi-directional electrical devices are connected, the method comprising
- selecting a first connection state of the circuit whose associated battery predicted OCV (Open Circuit Voltage) is at more than 70% of its SoC (State Of Charge) within the nominal voltage operating range Vr of the network,
- connecting the battery to the network, the battery adopting the first connection state,
- monitoring the battery output instant voltage Vi and
- if there is a further electricity source temporarily producing a device output instant voltage Vdᵢ exceeding the battery output instant voltage Vi but within the nominal voltage operating range Vr, commanding the controllable switching means to changing the first connection state of the circuit to a second connection state of the circuit producing wherein the battery output instant voltage Vi falls below the device output instant voltage Vdᵢ forcing the battery charge, the battery temporarily acting as an electrical load.

### DESCRIPTION OF THE DRAWINGS

Figs. 1a and 1b are schematic representations that show a same battery, or a module of a battery, whose cells are arranged in cell groups these groups being interconnected differently in each case, the battery/module therefore adopting two different circuit connection states producing different battery output instant voltages to show, only conceptually, a characteristic of the invention.
Fig. 2 shows schematically a first aeronautical energy network system.
Fig. 3a, 3b and 3c serves to illustrate, conceptually, cell groups of a first cell groups distribution differently interconnected between them in a same first dummy module of a battery that could supply energy to the system of Fig. 2, leading to respective different connection states of the battery electrical connection circuit interconnecting the said groups of cells.
Fig. 4a to 4c serves to illustrate, conceptually, cell groups of a second cell groups distribution differently interconnected between them in a same second dummy module of a battery that could supply energy to the system of Fig. 2, leading to equivalent connection states of the battery electrical connection circuit as those showed in Figs. 3a to 3c.
Fig. 5 graphically shows, conceptually, the variation in the battery output instant voltage Vi that would occur if the connection states of the battery electrical connection circuit, changing the interconnections of groups of cells within each module as illustrated in Figs. 3a to 3c, were to be sequentially adopted.
Fig. 6 graphically shows the variation in the battery output instant voltage Vi in a real example case.
Fig. 7 shows schematically a second aeronautical energy network system wherein electric engines capable of being a load or an electrical source are connected to the same.
Fig. 8a and 8b serves to illustrate, conceptually, cell groups differently interconnected between them in a same third dummy module of a battery, that could supply energy to the system of Fig. 6, leading to respective different connection states of the battery electrical connection circuit interconnecting the said groups of cells.
Fig. 9 graphically shows, conceptually, the behaviour of the network due to a change between the circuit connexion states illustrated in Figs. 8a and 8b.
Fig. 10a and 10b serves to illustrate, conceptually, cell groups differently interconnected between them in the same third dummy module of a battery, that could supply energy to the system of Fig. 6, leading to respective different connection states of the battery electrical connection circuit interconnecting the said groups of cells.
Fig. 11 graphically shows, conceptually, the behaviour of the network due to a change between the circuit connexion states illustrated in Figs. 10a and 10b.
Fig. 12 graphically shows the variation in the battery output instant voltage Vi in another real example case, in which the interconnections between battery modules are changed.
Fig. 13 shows an aircraft equipped with an aeronautical energy network system according to the invention.

### DETAILED DESCRIPTION OF THE INVENTION

This invention is exemplified on the basis of two aeronautical energy network systems 100, 101 having a defined nominal voltage operating range Vr to which electrical loads are connected, and which have in common that they comprise a battery 2 adapted to supply electricity to the network wherein the battery comprises a plurality of battery cells 22.

It is characteristic of the systems exemplifying the invention that the battery cells 22 are arranged in cell groups, comprising at least one main group having G cells connected in series in a fixed manner and several subsidiary groups each having gᵢ cells connected in series in a fixed manner. In the examples that follows the condition gᵢ<G is met.

Both G and gᵢ are understood to be integers.

To facilitate the explanations that follow, we will use the nomenclature G-number of cells to refer generically to the number of cells 22 in a main group; and the nomenclature g-number of cells to refer generically to the number of cells in a subsidiary group. When the description requires it, the specific number will be specified.

It is also characteristic of the systems exemplifying the invention that the battery has an electrical connection circuit with controllable switching means configured to selectively connect cell groups to each other in series or in parallel, to disconnect at least one group of cells from the circuit or to connect at least one previously disconnected group of cells to the circuit, producing, in respective corresponding connection states of the circuit, different battery output instant voltages Vi. To this effect, the system further comprises a controller 21 configured to command the controllable switching means to change the connection state of the circuit.

This will allow, as developed in greater detail later, a better use of the battery and even to simplify the network system, among other advantages.

Depending on the circumstances, it will be of interest to change the connection state of the circuit so that the battery output instant voltage Vi is higher or lower than that produced by a previous connection state of the circuit.

Advantages of special relevance are achieved if the system offers possibilities of changing between connection states of the circuit such that they produce a change in Vi of such magnitude that, for example, allow the battery to continue being an appropriate source of energy to the network for non-instantaneous periods once in a given connection state of the circuit the produced battery output instant voltage Vi falls below a lower voltage limit value Vmin of the nominal voltage operating range Vr.

In this sense, it is of interest that the system offers a pull of possibilities including at least one such that a change between connection states of the circuit produce a change in the battery output instant voltage Vi of at least its 10%, for example of at least 20%, for example of at least 30%, for example of at least 40%, for example of at least 50%, for example of at least 75%, for example of at least 100%, for example of at least 200%.

The controller above referred to can be integrated in the BMS (Battery Management System) of the type further prepared to, as it is commonly known by the expert, perform the typical functions of monitoring the battery, providing battery protection, estimating the battery's operational state and reporting operational status to external devices.

The controllable switching means can be MOSFET or relay, to name some.

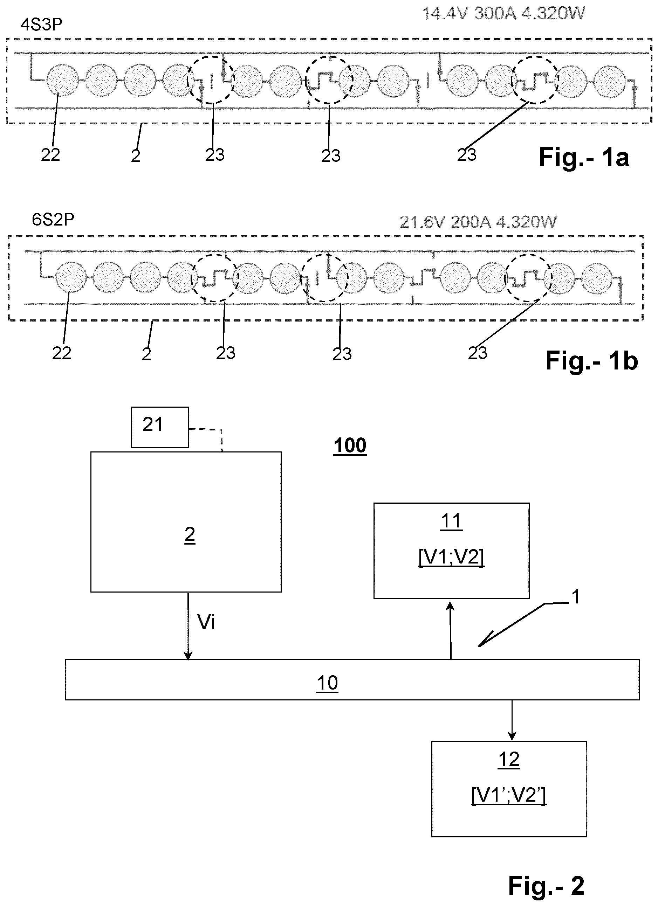

Figs. 1a and 1b use a simple fictitious battery 2 to show aspects of interest for the practice of the invention, which could well also be implemented in a battery module of a battery having several of such modules electrically interconnected in series.

Specifically, these Figs. 1a and 1b are used to illustrate not only how a different interconnection between cells 22 produces a different battery/module output instant voltage Vi; but also that a certain arrangement of cells, specifically an organization of them in groups with fixed connections between cells belonging to the same group, without excluding groupings with different number of cells, makes it possible to practice the invention in a simpler and more effective way than that the expert would have anticipated a priori taking into account that a real version of a battery appropriate to supply the tension required by an aeronautical energy network may have hundreds of cells to produce voltage values of hundreds of volts.

In the specific simple fictitious battery/module of Figs. 1 and 1b, a battery/module with a number of twelve cells 22 is shown, each cell represented by a circle. The twelve cells are grouped distinguishing in the battery/module a main group of cells with a G-number of cells where G=4; and four subsidiary groups of cells, each group having in the example the same g-number of cells, where g=2.

It is worth noticing that the cells 22 of a same group are connected in series in a fixed manner while the electrical connections between the groups of cells can be changed, in this case the electrical connection circuit of the battery is provided with controllable switching means 23 configured to selectively connect cell groups to each other in series or in parallel giving rise to different connection states of the circuit, as shown in the Figs. 1a and 1b.

The said connection states give rise to different circuit configurations. To be able to easily describe such circuit configurations, the nomenclature xSnP is used to refer to a matrix array configuration comprising a n number of parallel connections each having a x number of cells 22 connected in series.

To illustrate how a change between circuit connection states alters the battery/module output instant voltage Vi, assuming that each cell 22 provides for a nominal cell voltage of 3.6V, in a first connection state according to Fig. 1a a value Vi=14.4 V is obtained while in a second connection state according to Fig. 1b a value Vi=21.6V is obtained, as a result of a 4S3P circuit configuration in the first case and a 6S2P circuit configuration in the second case.

In addition, the particular selection in the simple fictitious battery/module of Figs. 1a and 1b having a G-number of cells in the main group and a g-number of cells in the various, and in this example equal, subsidiary groups, wherein g<G, it allows to reduce or limit the number of controllable switching means 23 without affecting the role and the expected versatility of the battery/module.

In effect, the G-number can be selected for example so that a minimum total number T of battery cells 22 belonging to a main group connectable in series in the battery 2 ensures a minimum battery output instant voltage Vi, for example a Vi value close to a lower voltage limit value Vmin of the nominal voltage operating range Vr of the battery-powered network; while a proper combination of a g-number and of the quantity of subsidiary groups it can offer enough interconnection options between groups of cells to allow an operator via the controller, manually but preferably automatically, to vary the battery output instant voltage Vi on demand, in response to certain situations that may occur.

The greater the difference between the G-number and the g-number, the more accurately the operator will be able to vary the battery output instant voltage Vi on demand, in response to certain situations that may occur, although it may require increasing the number of subsidiary groups and thus the number of controllable switching means.

The inventors take maximum advantage of these combined principles to solve different problems that arises in aeronautical energy network systems whose energy network have a defined nominal voltage operating range Vr appropriate for the equipment connected to the same and wherein the power is supplied by a battery.

Fig. 2 shows schematically a first aeronautical energy network system 100 exemplifying the invention which will not be described in detail in those aspects that do not condition the practice of the invention.

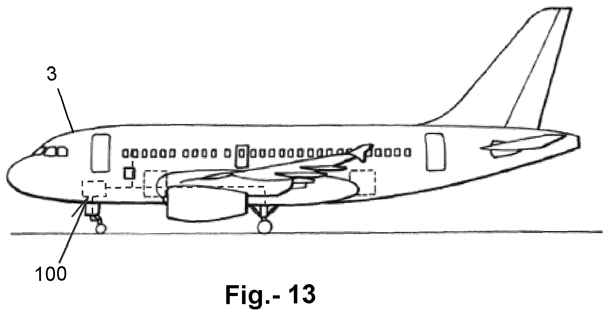

This specific system 100, embodied in an aircraft 3 (see Fig. 13) comprises an energy network 1 having a busbar 10 to which loads 11 and 12 and a battery 2 are connected, the system 100 having a controller 21 configured to command the controllable switching means to change the connection state of the battery electrical connection circuit. In this specific system 100, the busbar 10 gathers electric power from the battery 2 and then disperses it to the outgoing loads 11 and 12, each having a corresponding acceptable voltage range of functioning, in the example V1 to V2, for the load 11; and V1' to V2', for the load 12, as labelled in Fig. 2.

Different problems can arise, associated for example with the discharge of the battery 2 and with the need to equip the system with extra components that can affect the reliability of the same.

On the one hand, the battery cells are discharged, that is, they lose voltage as they gradually run out.

This phenomenon causes the battery output instant voltage Vi to vary according to the energy stored in the cells, specifically, decreasing as battery cells are discharged.

It happens that in some cases it is not possible to use all the energy stored in the battery cells because their discharge is such that the battery output instant voltage Vi falls below a lower voltage limit value Vmin of the network voltage operating range Vr and/or below the acceptable voltage range of functioning of any of the loads, for the example case any of loads 11 or 12.

Instead of, or in addition to, disconnecting a load or loads, which needs they are not critical, or in response of an emergency, the controller 21 offers the possibility to reconfigure the battery electrical connection circuit so that the battery output instant voltage Vi is restored at an acceptable value. More specifically, the controller 21 can command the controllable switching means changing the electrical connections between cell groups of the battery/module to increase the total number of cells connected in series if the battery output instant voltage Vi does not reach the objective voltage such that in a second circuit connection state a battery output instant voltage Vi overcomes the said objective voltage.

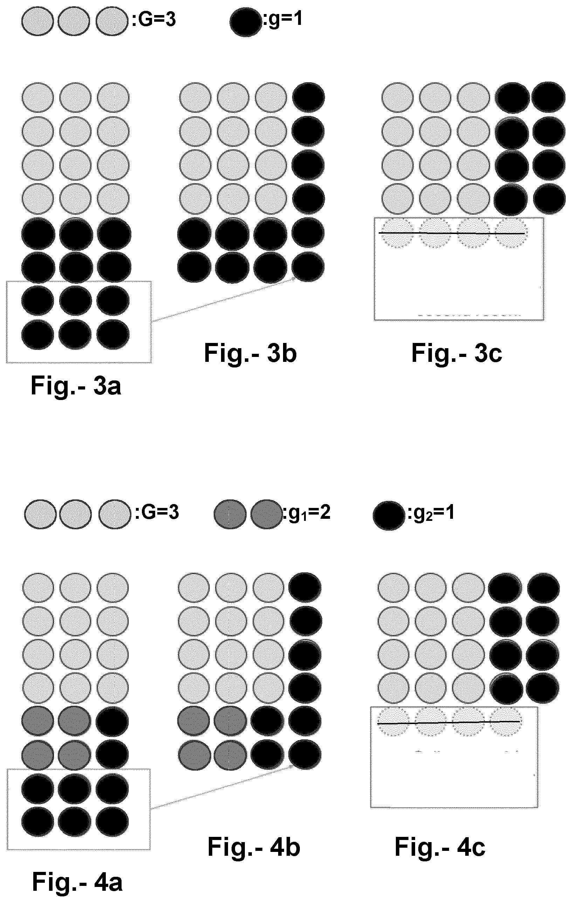

Figs. 3a to 3c schematically illustrates, for example, how starting from the 3S8P circuit configuration of the Fig. 3a two subsequent circuit reconfigurations, 4S6P in the circuit configuration of Fib. 3b and 5S4P in the circuit configuration of Fig. 3c, would each increase by aprox. 33% the number of cells in series of a battery module, of a fictitious battery that has several of these battery modules connected in series, increasing the battery output instant voltage Vi.

Figs. 4a to 4c show the same circuit configurations that were already illustrated in Figs. 3a to 3c, in this case Fig. 4a corresponds to Fig. 3a; Fig. 4b corresponds to Fig. 3b; and Figs. 4c correspond to Fig. 3c, although they show different ways of achieving such circuit reconfigurations.

Specifically, in the case of Figs. 3a to 3c, the two circuit reconfigurations are implemented on the basis of an arrangement of four main groups where G=3 and twelve equal subsidiary groups where g=1; while in the case of Figs. 4a to 4c the circuit reconfigurations are implemented on the basis of an arrangement of four main groups where G=3, and ten non-equal subsidiary groups with two subsidiary groups of a first type where g₁=2 and eight subsidiary groups of a second type where g₂=1.

In any case, it should be noted that one of the circuit reconfigurations, the one corresponding to Figs. 3c and 4c, involves disconnecting groups of cells from the circuit. That is, the invention contemplates, as noted before, commanding the controllable switching means to disconnect at least one group of cells from the circuit or connecting at least one previously disconnected group of cells to the circuit, respectively.

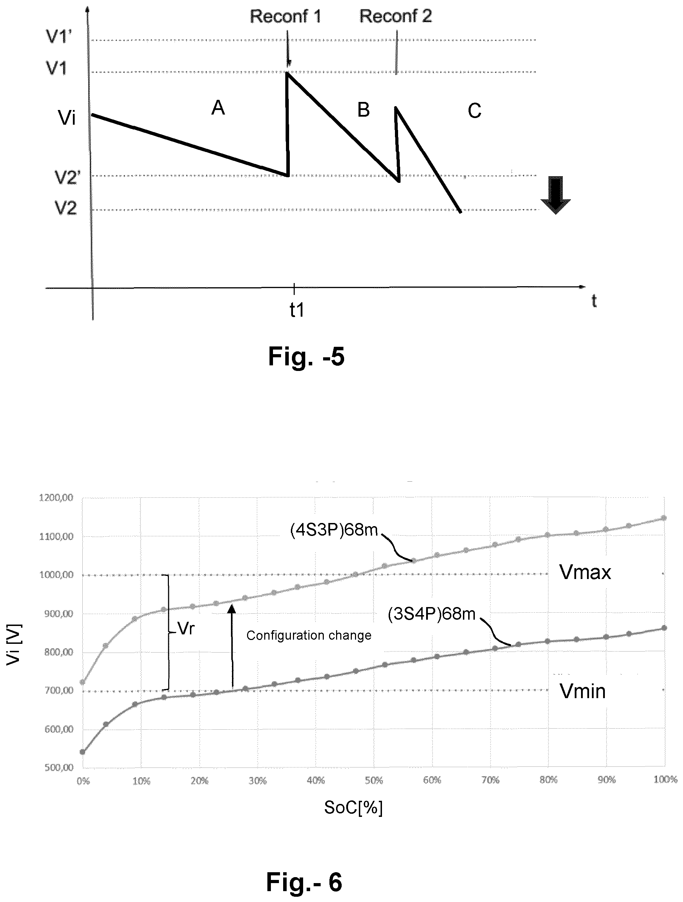

Fig. 5 graphically shows a variation in the battery output instant voltage Vi that would occur if the connection state of the battery electrical connection circuit, changing the interconnections of groups of cells within each module, illustrated in Figs. 3a to 3c were to be sequentially adopted, particularly each time the battery output instant voltage Vi falls outside the acceptable voltage range of functioning of a specific load, in the present case the load 12.

In the said Fig. 5, the zone A reflects the initial configuration discharge performance before the first circuit reconfiguration; the zone B a subsequent discharge performance, before the second circuit reconfiguration; and the zone C a further discharge performance upon the second circuit reconfiguration where the incursion of Vi below V2', circumstance indicated by an arrow, is allowed if load 12 is disconnected. From t1 onwards, the practice of the invention represents a gain in the battery use.

In this specific case scenario shown in Fig. 5, the second circuit reconfiguration would be typically only used in an emergency situation where the functioning of the load 11 is critical and the further use of the battery is not considered, because it would probably had to be the subject of a specific maintenance after that second circuit configuration as the impact of not using part of the cells would lead to have unbalanced cells on the pack which would need to have a specific procedure of balancing before being operational again.

However, as the expert will understand, as a last resort, the supply of energy in an emergency situation will more than justify that the battery can subsequently be temporarily remain out of service.

For illustrative purposes only, and with regard to the specific system 100 that exemplifies a variant of the invention, typical outgoing loads represented by the load 12 may be a compressor of a refrigeration equipment and the electrical resistors of an anti-icing equipment, among others possibilities; wherein the nominal voltage operating range Vr is determined by an upper voltage limit value Vmax=1000V and a lower voltage limit value Vmin=700V encompassing the acceptable voltage range of functioning of the both load 11 and load 12, referred to as V1-V2 and V1'-V2' in the Fig. 5.

Naturally, and as the expert will understand, a real system will be able to have more loads connected to the busbar without affecting the practice of the invention.

Likewise, the nature of battery cells can also vary. In this sense, and just as an example, cells can be based on any of the technologies NMC (a version of a lithium-ion battery with a cell voltage of 3.6 V or of a lithium nickel manganese cobalt battery with a cell voltage of 4.2 V), LFP (Lithium iron phosphate) or LTO (lithium Titanate), to name some.

Fig. 6 shows a circuit reconfiguration real example with real values of cell characteristics, for a total 816 cells packet in 68 modules connectable, and connected, in series. Considering a lower voltage limit value Vmin=700V for a given energy network, the controller will implement a circuit reconfiguration, changing the connection state of the circuit, changing the interconnections of groups of cells within each module, before the battery output instant voltage Vi reaches Vmin.

Specifically, the circuit reconfiguration allows the maximum use of the battery's energy.

More specifically, Fig. 6 indeed shows the selection of a battery and a first battery connection state of the same whose associated battery predicted OCV (Open Circuit Voltage) is at more than 70 % of its SoC (State Of Charge) within the nominal voltage operating range Vr of the network.

When the battery reaches a low SoC and its instantaneous output voltage Vi drops drastically and in fact falls below the lower voltage limit value Vmin, the controller commands the controllable switching means to change the first battery connection state, where in each module the cells are interconnected in 3S4P, to a second battery connection state, where in each module the cells are interconnected in 4S3P, producing an instantaneous battery output voltage Vi again within the nominal grid voltage Vr operating range.

Putting more cells in series allows to recuperate the output instant voltage Vi of the battery at an acceptable level for the network and keep using the battery's energy, while without this possibility the battery could not be used anymore despite still containing some energy (typically, 20% of energy left).

In a case of a battery supplying a last emergency load, the aim is to use all the energy that can be used as the battery is the last electrical power source available on the aircraft.

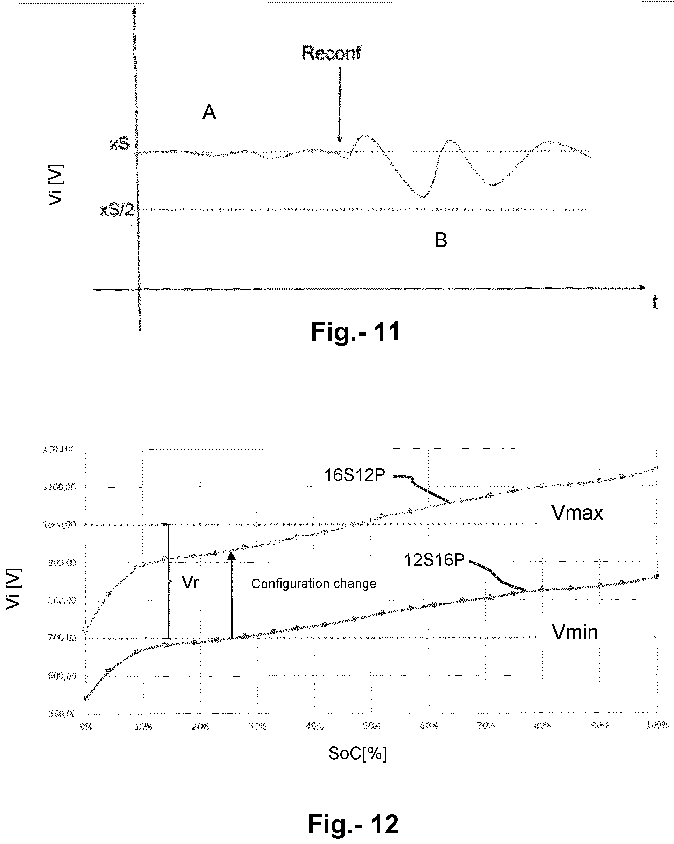

Fig. 12 shows another circuit reconfiguration real example with real values of cell characteristics, for a total of 192 equal modules, the cells in each module interconnected in 17S17P. Considering a lower voltage limit value Vmin=700V for a given energy network, the controller will implement a circuit reconfiguration, changing the connection state of the circuit, this time changing how the modules are electrically interconnected, before the battery output instant voltage Vi reaches Vmin.

More specifically, when the battery reaches a low SoC and its output instant voltage Vi drops drastically and indeed falls below the lower voltage limit value Vmin the controller commands the controllable switching means changing the first battery connection state, whose modules are interconnected in 12S16P, to a second battery connection state, whose modules are interconnected in 16S12P, producing a battery output instant voltage Vi again within the nominal voltage operating range Vr of the network, without changing the battery cell connections within each module, maintaining a 17S17P arrangement of battery cells of 3.6 V nominal voltage.

The example of Fig. 12 serves to show that the invention can be practiced by providing controllable switching means at the module level, this is to change the electrical connections between the modules.

The specific example of Fig. 12 can be practiced by providing module-level groupings, such as main groups with a number of 6 modules connected in series in a fixed manner and equal subsidiary groups each with a number of 4 modules connected in series in a fixed manner.

This is compatible with the cells being grouped into main and subsidiary groups within each module, the interconnection between these groups of cells being able to be changed within each module; but this is also compatible with the alternative wherein within each module a specific interconnection between its cells cannot be changed.

Turning again to the problems identified before, and specifically with regards the reliability of the system, it is worth highlighting, as exemplifies the specific system of Fig. 2, the absence in it of a DC/DC intermediating converter.

Since in some cases it is not possible to use all the energy stored in the battery cells because the upper Vmax or lower Vmin voltage limits of the voltage operating range Vr are exceeded, for example, while the battery is being charged or discharged, respectively, a DC/DC converter is commonly installed to adapt the battery output instant voltage Vi to the voltage operating range Vr of the network, but this solution increases the weight of the system, the cost and reduces the reliability of the same.

That said, the present invention can avoid the installation of the DC/DC converter. This is because changing the connection state of the circuit by changing the interconnection of groups of cells (in the case of cells distributed in modules, it can be by modifying the interconnections between cell groups within each module and/or by modifying the interconnections between the modules) as above exemplified, makes possible to regulate the battery output instant voltage Vi to match the voltage operating range Vr of the network. In practice, if Vmax is exceeded, a connection state of the circuit reducing the number of cells in series would be available whereas if Vmin is exceeded, a connection state of the circuit increasing the number of cells in series would also be available.

In addition to the above, it is known that when the battery is being charged, in order to increase the efficiency of the charge, it is of interest to increase the voltage of the battery so that for the same amount of power, the current is reduced. This reduces the energy lost by the charger and by the electrical components between the charger and the cells.

In the system of the invention, by way of changing the battery circuit connection state it is possible, as exemplified before, to increase the number of cells in series, thereby increasing the voltage of the battery.

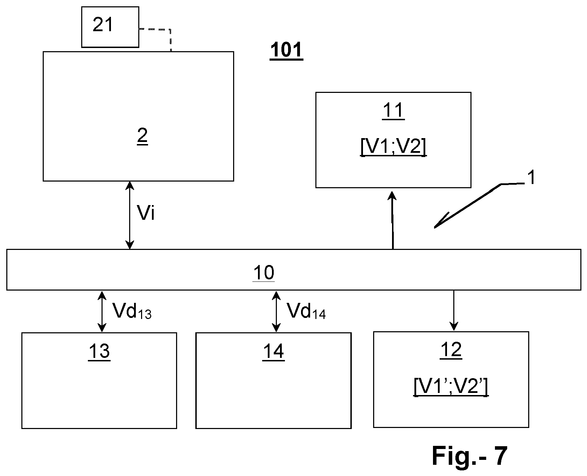

Fig. 7 shows schematically a second aeronautical energy network system 101 also exemplifying the invention wherein in addition to the loads 11 and 12 electric engines 13 and 14 capable of being a load or an electrical source are connected to the same. As an electricity source the electrical engines 13 and 14 are capable to produce a device output instant voltage Vd₁₃ and Vd₁₄, respectively

The characteristics of a system according to the invention offer the operator, in addition to playing with the circuit connection states to respond to the scenarios and situations already explained in reference to the system 100, also to be able to play with the circuit connection states according to, and if it occurs, an energy contribution by the electric engines.

With reference to the specific system 101, the several sources of energy are proposed to work in a master/slave configuration, where the master energy source controls the voltage level of the network 1 and the power sharing between the different sources.

During an electric engine power injection scenario the system 101 is prepared, and the controllable switching means can be commanded by the controller 21, to reconfigure the battery's circuit, selecting a connection state of the circuit to produce a battery output instant voltage Vi higher than that temporarily produced by the electric engine, preferably within the network voltage operating range Vr, so as to force itself acting as the main energy provider on the network (becoming the master, in case of various electric engines feeding the network in a master/slave configuration).

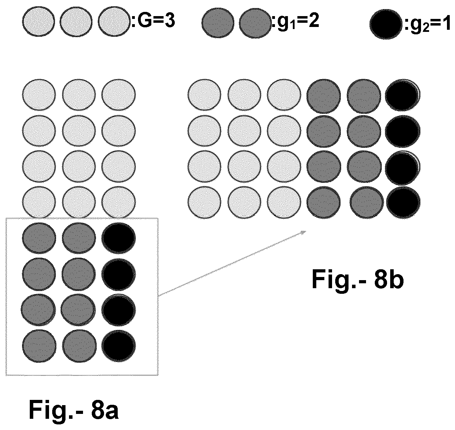

Figs. 8a and 8b schematically illustrates, for example, how starting from the 3S8P cell arrangement circuit configuration of the Fig. 8a to the 6S4P cell arrangement circuit configuration of the Fig. 8b this would increase by 50% the number of cells in series of a battery module, of a fictitious battery that has several of these battery modules connected in series, therefore increasing the battery output instant voltage Vi.

Specifically, in the case of Figs. 8a and 8b, the module circuit reconfiguration is implemented on the basis of an arrangement of four main groups of cells where G=3 (Fig. 8); and eight non-equal subsidiary groups with four subsidiary groups of a first type where g₁=2 and four subsidiary groups of a second type where g₂=1 (Fig. 8b).

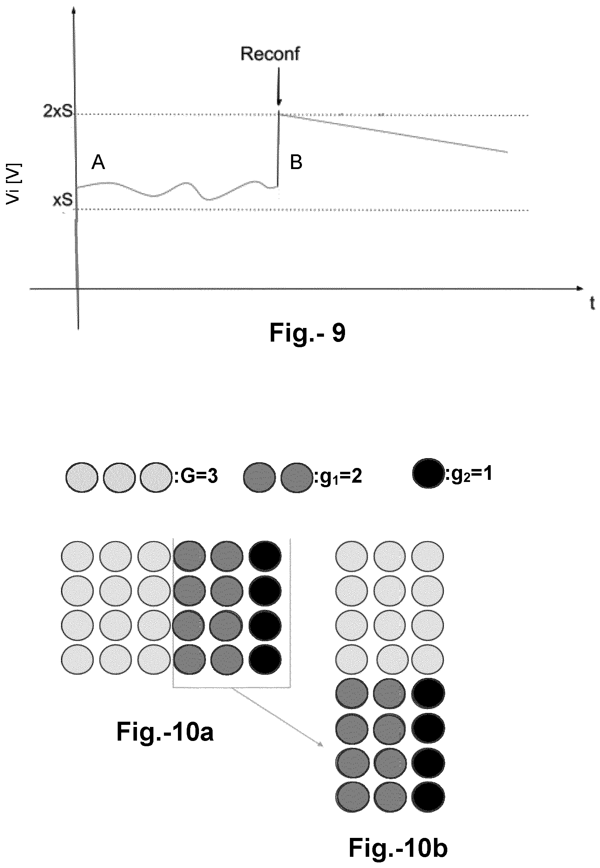

Fig. 9 graphically shows at network level the behaviour of the system 102 when the change in the circuit configuration above described is implemented.

In the said Fig. 9, the zone A reflects the initial configuration network voltage imposed by electric engine acting in source mode, before the circuit reconfiguration, the battery charging (acting as a load) as network voltage is higher than its Vi; and the zone B reflects a subsequent configuration network voltage now imposed by the discharge profile of the battery, the battery acting as master source and the electric engines acting as loads receiving power injection, without additional control element.

The invention also envisages that during an electric engine power injection scenario the controllable switching means be commanded by the controller 21 to reconfigure the battery 2, in this case voluntary lowering the battery output instant voltage Vi below the lower voltage limit value Vmin of the network voltage operating range Vr so that the battery 2 remains under the control, in energetic terms and in the context of the master/slave configuration role, of the eMachine, without a DC/DC intermediating converter, in case it is seen for example that the battery state of charge is low.

Consequently, temporary surplus energy may be used to charge the battery 2.

Figs. 10a and 10b schematically illustrates, for example, how starting from the 6S4P cell arrangement circuit configuration of the Fig. 10a to the 3S8P cell arrangement circuit reconfiguration of the Fig. 10b this would decrease by 50% the number of cells in series of a battery module, of a fictitious battery 2 that has several of these battery modules connected in series, therefore reducing the battery output instant voltage Vi, in the present case leaving the battery at the expense of an eMachine.

Fig. 11 graphically shows at network level the behaviour of the system 102 when the change in the circuit configuration above described is implemented.

In the said Fig. 11, the zone A reflects the initial configuration network voltage imposed by electric engine acting in source mode, before the circuit reconfiguration, the battery acting as a natural buffer to amortize network variations; and the zone B reflects a subsequent configuration network voltage now the battery charging, acting as a load.

## Claims

1. An aeronautical energy network system (100, 101) comprising,
- an energy network (1), having a defined nominal voltage operating range (Vr) to which electrical loads (11,12) are connected, and
- at least one battery (2), adapted to supply electricity to the energy network (1), wherein the battery (2) comprises a plurality of battery cells (22),
the system (100, 101) being **characterized in that**,
the battery cells (22) are arranged in cell groups, comprising at least one main group having G cells connected in series in a fixed manner and several subsidiary groups each having gᵢ cells connected in series in a fixed manner, where gᵢ≤G;
the battery (2) has an electrical connection circuit with controllable switching means (23) configured to at least selectively connect cell groups to each other in series or in parallel producing, in a corresponding connection state of the circuit, a battery output instant voltage (Vi);
the system further comprising a controller (21), configured to command the controllable switching means (23) to change the connection state of the circuit between at least two different connection states, of which one is a connection state producing a battery output instant voltage (Vi) outside the nominal voltage operating range (Vr) of the network; and the other is a connection state producing a battery output instant voltage (Vi) within the nominal voltage operating range of the network.

2. An aeronautical energy network system (100, 101) according to claim 2, **characterized in that** there are several main groups of cells each having a same number of G cells and several subsidiary groups of cells all having the same number of gᵢ cells, wherein gᵢ<G.

3. An aeronautical energy network system (100, 101) according to claim 1, **characterized in that** there are several main groups of cells each having a same number of G cells and several subsidiary groups of cells with subsidiary groups having a different number of gᵢ cells, wherein gᵢ<G.

4. An aeronautical energy network system (100, 101) according to any of claims 1 to 3, **characterized in that** being the nominal voltage operating range (Vr) determined by an upper voltage limit value (Vmax) and a lower voltage limit value (Vmin), the minimum total number T of battery cells (22) belonging to a main group that are connectable in series in the electrical connection circuit complies with $Vmin \leq T * Cv ,$ wherein Cv is the battery's cell nominal voltage.

5. An aeronautical energy network system (100, 101) according to claim 4, **characterized in that** the battery cells (22) are packet in modules replicated and electrically interconnectable in series, in each module the cells (22) being arranged in the cell groups comprising the at least one main group of G cells and the several subsidiary groups each having gᵢ cells, wherein $T = m * G ,$ wherein m is the minimum number of modules connectable in series.

6. An aeronautical energy network system (100, 101) according to any of claims 1 to 5, **characterized in that** the at least one battery (2) is directly connected to the energy network (1) without a DC/DC intermediating converter.

7. An aeronautical energy network system (100) according to any of claims 1 to 6, **characterized in that**, given a first circuit connection state comprising a *n* number of parallel connections each having a *x* number of cells connected in series producing a battery output instant voltage (Vi), the controller is configured for one or more of the following:
a) commanding the controllable switching means to change electrical connections between cell groups to reduce the *x* number of cells connected in series if the battery output instant voltage (Vi) exceeds an upper voltage limit value (Vmax) of the nominal voltage operating range (Vr), such that in a second circuit connection state a battery output instant voltage (Vi) within the nominal voltage operating range (Vr) of the network is produced,
b) commanding the controllable switching means changing the electrical connections between cell groups to increase the *x* number of cells connected in series if the battery output instant voltage (Vi) does not reach the lower voltage limit value (Vmin) of the nominal voltage operating range (Vr), such that in a second circuit connection state a battery output instant voltage (Vi) within the nominal voltage operating range (Vr) of the network is produced.

8. An aeronautical energy network system (101) according to any of claims 1 to 7, **characterized in that** the energy network (1) is a network to which one or more bi-directional electrical devices (13, 14) are connected, and **in that** given a first circuit connection state comprising a *n* number of parallel connections each having a x number of cells connected in series producing a battery output instant voltage (Vi), the controller is configured for one or more of the following:
c) commanding the controllable switching means to change the electrical connections between groups to increase the *x* number of cells connected in series if one or more bi-directional electrical devices (13, 14) works as an electricity source producing a device output instant voltage (Vd₁₃, Vd₁₄ exceeding the battery output instant voltage (Vi); such that in a second circuit connection state the battery output instant voltage (Vi) exceeds the device output instant voltage (Vd₁₃, Vd₁₄) but remains within the nominal voltage operating range (Vr) therefore imposing the network voltage;
d) commanding the controllable switching means to change the electrical connections between cell groups to reduce the *x* number of cells connected in series if one or more bi-directional electrical devices (13, 14) works as an electricity source producing a device output instant voltage (Vd₁₃, Vd₁₄) within the nominal voltage operating range (Vr) and exceeding the battery output instant voltage (Vi), such that in a second circuit connection state the battery output instant voltage (Vi) falls below the device output instant voltage (Vd₁₃, Vd₁₄) forcing the battery charge, the battery acting as an electrical load.

9. An aeronautical energy network system (100) according any one of claims 6 to 8, **characterized in that** the total number of group of cells electrically connected to the circuit is maintained.

10. An aeronautical energy network system (100) according to any one of claims 6 to 8, **characterized in that** commanding the controllable switching means to reduce or increase the *x* number of cells connected in series comprises disconnecting at least one group of cells from the circuit or connecting at least one previously disconnected group of cells to the circuit, respectively.

11. An aircraft (3) comprising an aeronautical energy network system (100, 101) according to any one of the preceding claims.

12. A method of commanding the controllable switching means of the at least one battery (2) supplying electricity to the aeronautical energy network system (100, 101) according to any one of the preceding claims, the method comprising
- selecting a first connection state of the circuit whose associated battery predicted OCV is at more than 70% of its SoC within the nominal voltage operating range (Vr) of the network,
- connecting the battery to the network, the battery adopting the first connection state,
- monitoring the battery output instant voltage (Vi) and,
- if the said battery output instant voltage (Vi) falls below the nominal voltage operating range (Vr) of the network, commanding the controllable switching means changing the first connection state of the circuit to a second connection state of the circuit producing a battery output instant voltage (Vi) within the nominal voltage operating range (Vr) of the network.

13. A method according to claim 12, **characterized in that** the method further comprises, the battery adopting the said second connection state of the circuit,
- monitoring the battery output instant voltage (Vi) and,
- if the said battery output instant voltage (Vi) falls outside the nominal voltage operating range (Vr) of the network, commanding the controllable switching means changing the second connection state of the circuit to a third connection state of the circuit producing a battery output instant voltage (Vi) within the nominal voltage operating range (Vr) of the network.

14. A method according to claim 12 or 13, **characterized in that** commanding the controllable switching means changing the connection state of the circuit comprises disconnecting at least one group of cells from the circuit.

15. A method of commanding the controllable switching means of the at least one battery (2) supplying electricity to the aeronautical energy network system (100, 101) according to any one of the claims 7 to 11, the method comprising
- selecting a first connection state of the circuit whose associated battery predicted OCV is at more than 70% of its SoC within the nominal voltage operating range (Vr) of the network,
- connecting the battery to the network, the battery adopting the first connection state,
- monitoring the battery output instant voltage (Vi) and
- if there is a further electricity source temporarily producing a device output instant voltage (Vdi) exceeding the battery output instant voltage (Vi) but within the nominal voltage operating range (Vr), commanding the controllable switching means to changing the first connection state of the circuit to a second connection state of the circuit producing wherein the battery output instant voltage (Vi) falls below the device output instant voltage (Vdi) forcing the battery charge, the battery temporarily acting as an electrical load.
